# EUROPÄISCHE PATENTSCHRIFT

(11) **EP 4 279 024 B1**
(45) Veröffentlichungstag und Bekanntmachung des Hinweises auf die Patenterteilung: **26.03.2025**
(21) Anmeldenummer: 22174456.8
(22) Anmeldetag: 19.05.2022
(51) Int. Cl.: A61C 13/00

(54) **DENTALROHLING SOWIE TRANSPORTSYSTEM, LAGERSYSTEM ODER SPANNVORRICHTUNG DAFÜR**
DENTAL BLANK AND TRANSPORT SYSTEM, STORAGE SYSTEM OR CLAMPING DEVICE THEREFOR
ÉBAUCHE DENTAIRE ET SYSTÈME DE TRANSPORT, SYSTÈME DE STOCKAGE OU DISPOSITIF DE SERRAGE POUR CELLE-CI

(43) Veröffentlichungstag der Anmeldung: 22.11.2023
(73) Patentinhaber: Steger, Heinrich, 39032 Sand in Taufers (IT)
(72) Erfinder: Steger, Heinrich, 39032 Sand in Taufers (IT)
(74) Vertreter: Schwarz & Partner Patentanwälte GmbH

(56) Entgegenhaltungen:
- US-A1- 2016 317 258
- US-A1- 2019 046 305

## Beschreibung

Die vorliegende Erfindung betrifft einen Rohling zur Herstellung eines Dentalelements mit einem zylindrischen Grundkörper, wobei der Grundkörper eine Deckfläche, eine Grundfläche und eine Mantelfläche aufweist, wobei in der Mantelfläche zumindest eine Positionierungsnut eingebracht ist. Weiters betrifft die Erfindung ein Transportsystem, Lagersystem und / oder eine Spannvorrichtung für einen Rohling.

### HINTERGRUND DER ERFINDUNG

Dentalrohlinge werden für die Herstellung von Dentalelementen wie z.B. von Dentalmodellen oder von dentalen Ersatzteilen benötigt. Der Rohling wird mit einem Transportsystem zu einer Spannvorrichtung transportiert, darin positioniert und mit einer Maschine für die spanende Bearbeitung zum gewünschten Dentalelement verarbeitet.

US 10,799,326 B2, US 2016/317258 A1 und US 2019/046305 A1 offenbaren jeweils einen Dentalrohling, dessen Grundform kreiszylindrisch ist. Der Dentalrohling weist eine Positioniernut zum Positionieren in der Maschinenhalterung auf. Weiters ist ein Transportsystem für den Rohling offenbart.

In WO 2020/058442 A2 wird ein Rohling beschrieben, der sogenannte "Schlüsselstrukturen" aufweist, die eine exakte Repositionierung ermöglichen. Es werden hier Noppen, Vertiefungen und dergleichen als mögliche Formen der Schlüsselstrukturen genannt.

Ein gattungsgemäßer Rohling wird in EP 3 095 412 A2 beschrieben. Der Rohling weist einen zylindrischen Grundkörper mit einer Positioniernut zum Positionieren in einer Maschinenhalterung auf. Der Transport des Rohlings erfolgt über eine Transportvorrichtung, welche in der Lage ist, den Rohling aufzunehmen.

### KURZBESCHREIBUNG DER ERFINDUNG

Der Transport eines Rohlings aus einem Lagersystem zur Spannvorrichtung und die exakte Positionierung bedürfen nach Stand der Technik teilweise komplexer, aufwändiger und mit hohen Kosten verbundener Aufnahmevorrichtungen. Aufgabe der vorliegenden Erfindung ist daher die Bereitstellung eines Rohlings und einer Transportvorrichtung für den Rohling, womit der Transport, die Lagerung und die Positionierung vollautomatisch und in vereinfachter Weise erfolgen können.

Gelöst wird diese Aufgabe durch einen Rohling zur Herstellung eines Dentalelements, wobei der Rohling einen zylindrischen Grundkörper mit einer Deckfläche, einer Grundfläche und einer Mantelfläche aufweist, wobei in der Mantelfläche zumindest eine Positionierungsnut eingebracht ist, dadurch gekennzeichnet, dass der Rohling ein erstes Aufnahmeelement und ein beabstandetes zweites Aufnahmeelement aufweist, wobei jedes Aufnahmeelement zumindest eine Nut aufweist, die seitlich in der Mantelfläche angeordnet ist, wobei die Nut von der Grundfläche in Richtung Deckfläche verläuft und eine Länge aufweist, welche der Summe aus der Hälfte der Höhe des Grundkörpers plus der Höhe-Auflagefläche entspricht, wobei die Höhe-Auflagefläche der Abstand zwischen der Mitte des Grundkörpers zur Auflagefläche ist, wobei die Länge geringer als die Höhe des Grundkörpers ist, wobei die Nut eine Auflagefläche am oberen Ende aufweist, wobei in der Auflagefläche eine Vertiefung vorgesehen ist, welche Richtung Deckfläche verläuft.

Die Nut an der Mantelfläche erstreckt sich von der Mantelfläche seitlich Richtung Mittelachse des Rohlings und ist nach unten hin zur Grundfläche offen und nach oben hin zur Deckfläche durch die Auflagefläche begrenzt. Die Auflagefläche ist vorzugsweise eben, besonders bevorzugt parallel zur Deckfläche, und weist eine Vertiefung auf, die zur Deckfläche hingerichtet ist.

Nachfolgend wird die Länge der Nut auch als die Summe aus der Hälfte der Höhe des Grundkörpers plus der Höhe-Auflägefläche bezeichnet, wobei die Höhe-Auflagefläche der Abstand zwischen der Mitte des Grundkörpers zur Auflagefläche ist.

Das erste Aufnahmeelement ermöglicht die Aufnahme des Rohlings durch ein Transportsystem mit entsprechender Positionierhilfe. Die Positionierhilfe für das Transportsystem umfasst:
- eine zur Mantelfläche passgleiche Transportsystem-Teilform,
- zwei zur Auflagefläche passgleiche Transportsystem-Auflageflächen und
- zwei zu den Vertiefungen passgleiche Transportsystem-Vorsprünge.

Somit ist das Transportsystem über die Positionierhilfe mit dem Rohling formschlüssig aber lösbar im Bereich des Aufnahmeelements verbunden. Der Rohling liegt mit der Auflagefläche auf der zur Auflagefläche passgleichen Transportsystem-Auflagefläche auf, sodass ein Transport z.B. ohne Klemmgreifer möglich ist. Der Transportsystem-Vorsprung ragt in die Vertiefung und stabilisiert den Rohling am Transportsystem.

Das zweite Aufnahmeelement ermöglicht die Aufnahme des Rohlings in einem Lagersystem mit entsprechender Lagersystem-Positionierhilfe. Die Positionierhilfe für das Lagersystem umfasst:
- eine zur Mantelfläche passgleiche Lagersystem-Teilform,
- zwei zur Auflagefläche passgleiche Lagersystem-Auflageflächen und
- zwei zu den Vertiefungen passgleiche Lagersystem-Vorsprünge.

Analog dem Transportsystem kann auch das Lagersystem über die entsprechende Positionierhilfe mit dem Rohling eine formschlüssige, lösbare Verbindung im Bereich des Aufnahmeelements eingehen. Der Rohling liegt mit der Auflagefläche auf der zur Auflagefläche passgleichen Lagersystem-Auflagefläche auf, sodass eine Lagerung oder Positionierung z.B. ohne Klemmgreifer möglich ist. Der Lagersystem-Vorsprung ragt in die Vertiefung und stabilisiert den Rohling am Lagersystem oder der Spannvorrichtung.

Die Aufnahmeelemente ermöglichen also eine vereinfachte Aufnahme durch ein entsprechendes Transportsystem und eine exakte Übergabe an ein Lagersystem oder eine Spannvorrichtung.

Während die Positionierungsnut der Positionierung des Rohlings in einer Spannvorrichtung dient, sorgen die beiden Aufnahmeelemente zum einen für einen reibungslosen, automatisierten Transport und zum anderen für eine eventuelle Lagerung zwischen Lagersystem, Transportsystem oder Spannvorrichtung bzw. Werkzeugraum.

Die beiden Aufnahmeelemente sind um den Umfang des Rohlings verteilt und liegen einander etwa gegenüber.

Bevorzugt ist vorgesehen, dass jedes Aufnahmeelement zumindest zwei Nuten aufweist, da dies die Stabilität bei Transport, Lagerung und Positionierung erhöht. Es sind dann also zwei Aufnahmeelemente mit je einem Paar an Vertiefungen vorgesehen. Jedes Aufnahmeelement weist dann bevorzugt zwei Nuten auf, die seitlich in der Mantelfläche angeordnet sind, wobei jede Nut von der Grundfläche in Richtung Deckfläche verläuft und eine Länge aufweist, welche geringer als die Höhe des Grundkörpers ist, wobei jede Nut eine Auflagefläche am oberen Ende der Nut aufweist, wobei in jeder Auflagefläche eine Vertiefung vorgesehen ist, welche Richtung Deckfläche verläuft.

In dieser Ausführungsvariante weisen das Paar Vertiefungen des ersten Aufnahmeelements einen ersten Abstand L1 und das Paar Vertiefungen des zweiten Aufnahmeelements einen zweiten Abstand L2 auf, wobei die beiden Abstände L1, L2 bevorzugt unterschiedlich sind. Dadurch ist eine Kodierung möglich, die ein korrektes Einlegen des Rohlings sicherstellt bzw. ein falsches Einlegen des Rohlings verhindert.

Die Abstände L3, L4 jeder Ausnehmung vom Umfang des Rohlings können identisch oder unterschiedlich sein.

Die Nut an der Mantelfläche, welche von der Grundfläche in Richtung Deckfläche verläuft, kann eine beliebige Länge aufweisen. Z.B. kann diese zwischen 20% und 80% der Höhe des Grundkörpers betragen. Eine Abstimmung auf die beiden Positionierhilfen ist allerdings bevorzugt. Dabei wird die Höhe-Auflagefläche von der Grundkörper-Mitte als Bezugsebene genommen und diese Höhe-Auflagefläche so gewählt, dass die Differenz zwischen Grundkörper-Mitte und der Höhe-Auflagefläche unabhängig von der Höhe verschiedener Rohlinge konstant ist.

Daher ist in einer Ausführungsvariante vorgesehen, dass die Nut eine Länge aufweist, die sich um die Höhe-Auflagefläche von der Grundkörper-Mitte aus erstreckt.

Die Positionierungsnut, erstreckt sich bevorzugt über die gesamte Höhe des Grundkörpers.

Die Vertiefung ist bevorzugt eine Bohrung mit einem Radius r. In einer besonders bevorzugten Ausführungsvariante ist vorgesehen, dass Vertiefung eine Durchgangsöffnung ist, die eine Bohrung mit Radius r ist.

Bevorzugt ist die Nut etwa halbkreisförmig und sie weist im Bereich der Durchgangsöffnung einen Krümmungsradius auf, welcher dem Radius der Bohrung entspricht. Dies erleichtert das Einführen der beiden Positionierhilfen.

Der Grundkörper weist aus Gründen der leichteren Herstellbarkeit und Weiterverarbeitbarkeit im einfachsten Fall eine im Wesentlichen gerade Kreiszylinderform auf.

Für die Bearbeitung des Rohlings in der Spannvorrichtung kann vorgesehen sein, dass von der Deckfläche zumindest eine seitliche Haltefläche vorgesehen ist, welche als Einbuchtung ausgebildet ist und sich von der Deckfläche Richtung Grundfläche über eine Höhe-seitliche Haltefläche von der Grundkörper Mitte aus, d.h. über lediglich einen Teil der Höhe des Grundkörpers, erstreckt.

Weiters kann zumindest eine Haltefläche auf einer Höhe-Haltefläche von der Grundkörper-Mitte vorgesehen sein, welche zwischen Deckfläche und Grundfläche angeordnet ist, eine klar definierte Höhe-Haltefläche von Grundkörper-Mitte besitzt und parallel zur Deckfläche ausgebildet ist, wobei zwischen der Haltefläche und der Grundfläche eine Einbuchtung in der Mantelfläche vorgesehen ist.

Der Rohling kann unterschiedliche Materialien aufweisen oder einstückig ausgebildet sein. In beiden Ausführungsvarianten weist der Grundkörper allerdings ein fräsbares Rohmaterial auf.

Bei einstückigen Ausführungsvarianten weist der Rohling zum Beispiel Kunststoff auf.

Eine alternative Ausführungsvariante sieht einen mehrteiligen Grundkörper vor. Dieser kann eine Halterung und einen fräsbaren Rohmaterialköper umfassen.

Die Halterung ist bevorzugt lösbar mit dem Rohmaterialkörper verbunden.

Bei mehrteiligen Grundkörpern kann z.B. die Halterung sämtliche Funktionen für die Halterung oder Positionierung umfassen oder es ist eine Kombination möglich, bei der der Rohmaterialkörper teilweise die Funktionen für die Halterung oder Positionierung übernehmen.

Mehrteilige Grundkörper haben den Vorteil, dass der Rohmaterialkörper nicht notwendigerweise vorbearbeitet sein muss, um die Funktionen für Halterung oder Positionierung einzubringen.

Der Rohmaterialkörper umfasst z.B. Kunststoff oder Zirkonium(IV)-oxid.

Bei allen Ausführungsvarianten kann ein Etikett vorgesehen sein. Dieses Etikett kann Informationen zur Identifizierung des Rohlings aufweisen. Beispielsweise kann das Etikett einen QR-Code, einen Strichcode, eine Datamatrix oder dergleichen umfassen.

Wie bereits einleitend ausgeführt, ist für den Rohling eine Vorrichtung zum Transportieren und Positionieren eines Rohlings der vorgenannten Art adaptiert. Daher betrifft die Erfindung ebenfalls ein Transportsystem für einen Rohling der vorgenannten Art, mit einer Positionierhilfe, wobei die Positionierhilfe für das Transportsystem:
- eine zur Mantelfläche passgleiche Transportsystem-Teilform,
- zwei zur Auflagefläche passgleiche Transportsystem-Auflageflächen und
- zwei zu den Vertiefungen passgleiche Transportsystem-Vorsprünge umfasst.

Außerdem betrifft die Erfindung ein Lagersystem für einen Rohling der vorgenannten Art, mit einer Lagersystem-Positionierhilfe, wobei die Positionierhilfe für das Lagersystem
- einen zur Mantelfläche passgleiche Lagersystem-Teilform,
- zwei zur Auflagefläche passgleiche Lagersystem-Auflageflächen und
- zwei zu den Vertiefungen passgleiche Lagersystem-Vorsprünge
umfasst.

Die Ausgestaltung ermöglicht eine passgenaue, formschlüssige Aufnahme.

Weiters können die Transport-Auflagefläche und/oder Lagersystem-Auflagefläche parallel zur Auflagefläche sein.

### DETAILLIERTE BESCHREIBUNG DER ERFINDUNG

Mit den beigefügten Figuren und mit der nachfolgenden Beschreibung werden weitere Details und Vorteile der Erfindung gezeigt.
- Fig. 1a: zeigt eine Ansicht von oben auf die Deckfläche eines erfindungsgemäßen Rohlings.
- Fig. 1b: zeigt die Seitenansicht eines erfindungsgemäßen Rohlings von Fig. 1a.
- Fig. 1c: zeigt eine Ansicht von schräg unten auf die Grundfläche des erfindungsgemäßen Rohlings von Fig. 1a.
- Fig. 2: zeigt einen Ausschnitt eines Transportsystems einer erfindungsmaßen Vorrichtung.
- Fig. 3a: zeigt den Ausschnitt des Transportsystems von Fig. 2 mit einem erfindungsgemäßen Rohling in Schrägriss.
- Fig. 3b: zeigt den Ausschnitt des Transportsystems von Fig. 2 mit einem erfindungsgemäßen Rohling in einer Ansicht von unten.
- Fig. 3c: zeigt einen Schnitt durch die Darstellung von Fig. 3b entlang der Linie I-II.
- Fig. 4a: zeigt eine Ansicht von oben auf die Deckfläche einer Ausführungsvariante eines erfindungsgemäßen Rohlings, in diesem Fall einer Halterung mit eingespanntem Rohmaterialkörper.
- Fig. 4b: zeigt eine Ansicht von schräg unten auf die Grundfläche der Ausführungsvariante von Fig. 4a.
- Fig. 5: zeigt eine erfindungsgemäße Spannvorrichtung.
- Fig. 6a: zeigt ein erfindungsgemäßes Lagersystem mit Transportsystem in Seitenansicht.
- Fig. 6b: zeigt ein erfindungsgemäßes Lagersystem mit Transportsystem in Draufsicht.

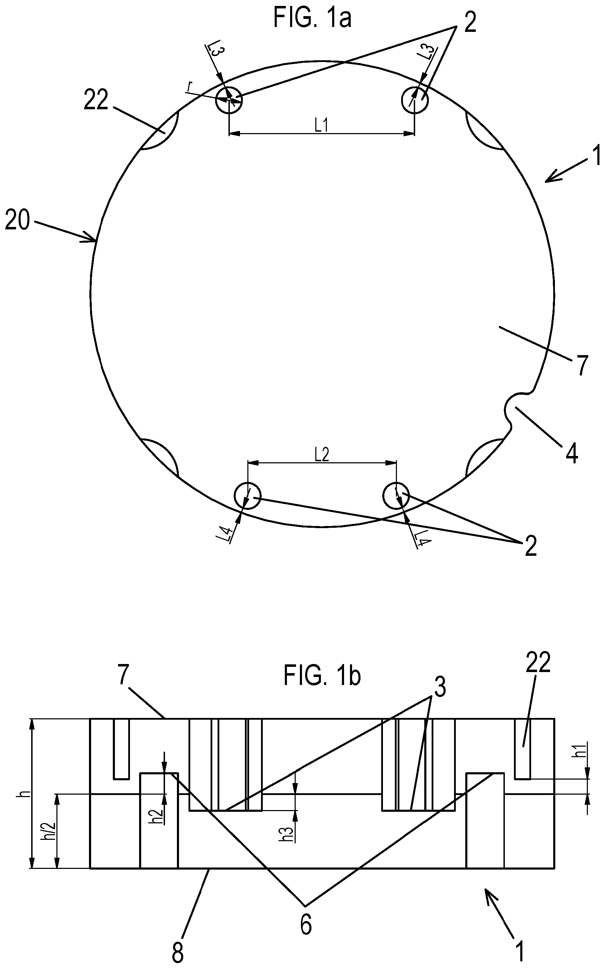

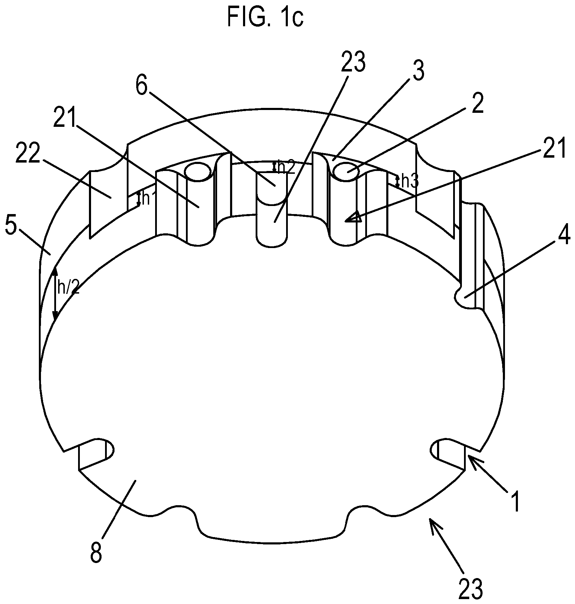

Fig. 1a bis 1c zeigen einen erfindungsgemäßen Rohling 1 für ein Dentalelement, auch als "Dentalrohling" im Rahmen der Offenbarung bezeichnet. Der Rohling 1 umfasst einen zylindrischen Grundkörper 5, wobei der Grundkörper 5 eine Deckfläche 7, eine Grundfläche 8 und eine Mantelfläche 20 aufweist. Der gezeigte Grundkörper 5 weist eine im Wesentlichen gerade Kreiszylinderform auf, wobei eine solche Form vorteilhaft aufgrund der Symmetrie ist, welche die Weiterbearbeitung vereinfacht. Andere Zylinderformen wie z.B. eine Quaderform, Würfelform, Prisenform oder elliptischer Zylinder sind aber ebenfalls denkbar.

In der Mantelfläche 20 ist eine Positionierungsnut 4 eingebracht, welche sich über die gesamte Höhe h des Grundkörpers 5 erstreckt. Es können auch mehrere Positionierungsnuten 4 eingebracht sein. Weiters sind im gezeigten Ausführungsbeispiel insgesamt vier Vertiefungen 2 vorgesehen. Jeweils zwei dieser Vertiefungen 2 bilden ein Paar und sind Teil des jeweiligen Aufnahmeelements.

Die Vertiefungen 2 sind als Durchgangsöffnungen ausgebildet und werden nachfolgend mit demselben Bezugszeichen 2 versehen. Diese erstrecken sich von der Deckfläche 7 zur Grundfläche 8. Das Ausführungsbeispiel zeigt die bevorzugte Form einer Durchgangsöffnung 2 als Bohrung mit Radius r. Im Bereich der jeweiligen Durchgangsöffnung 2 ist eine Nut 21 an der Mantelfläche 20 vorgesehen ist. Die Nut 21 beginnt an der Grundfläche 8 und erstreckt sich in Richtung Deckfläche 7 und sie verläuft in dem Bereich, in dem auch die Durchgangsöffnung 2, die als Bohrung ausgebildet ist, verläuft.

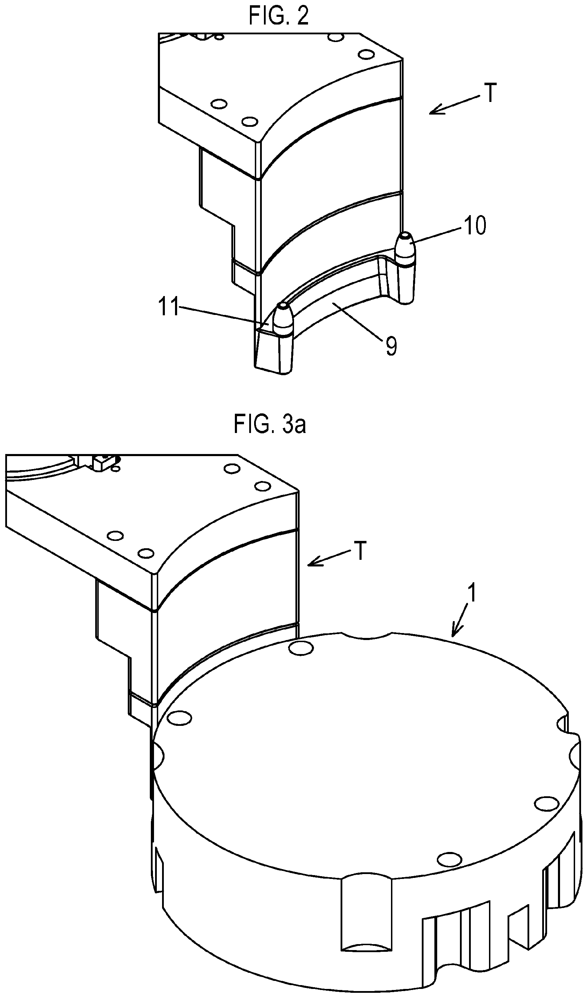

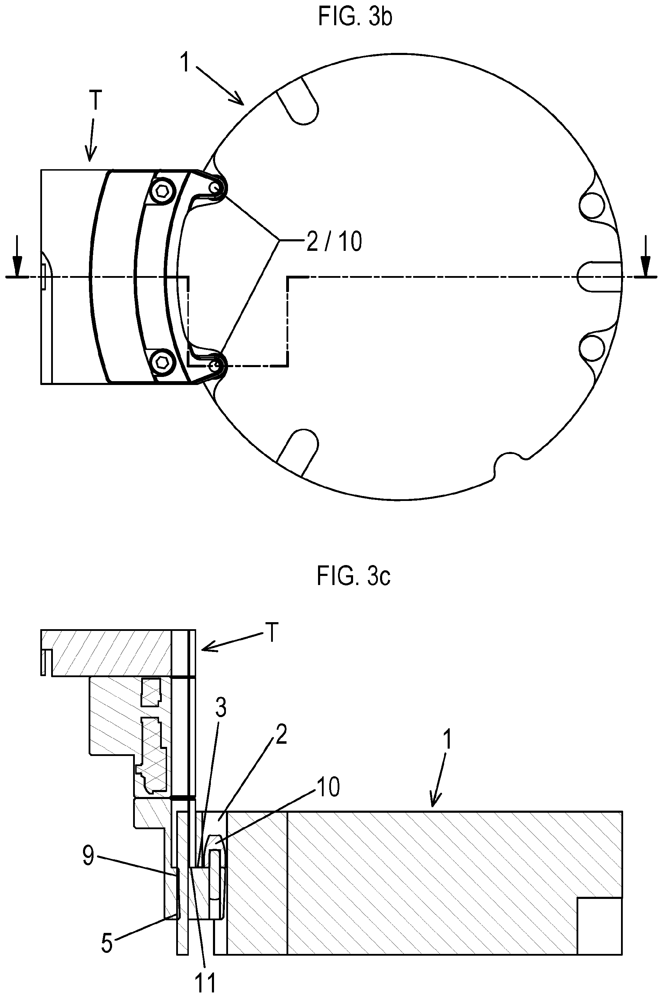

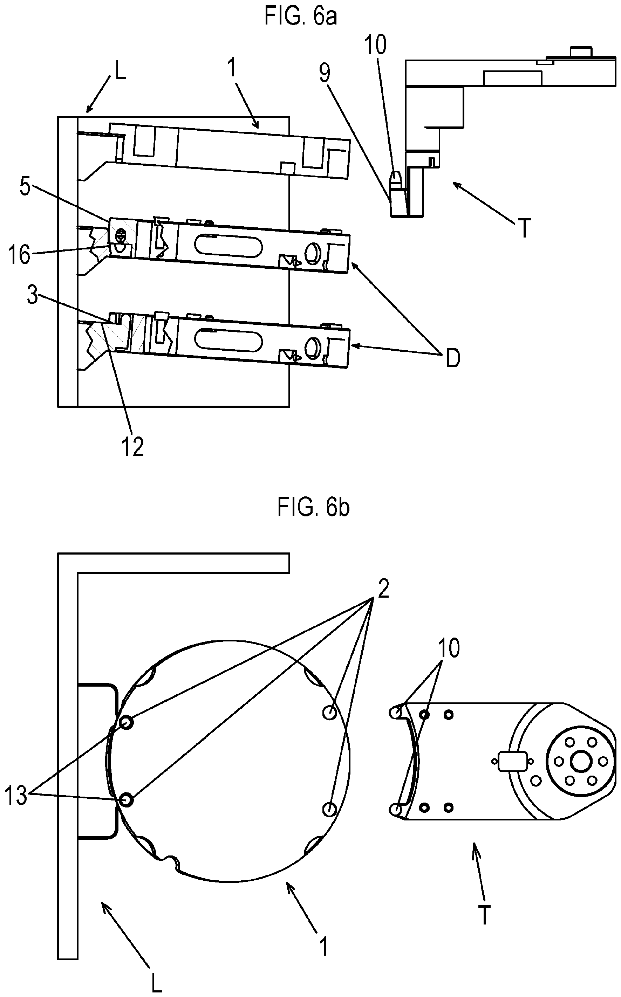

Jedes Aufnahmeelement weist zwei Nuten 21 auf, da dies die Stabilität bei Transport, Lagerung und Positionierung erhöht (siehe Fig. 3a, 6a). Es sind im gezeigten Ausführungsbeispiel zwei Aufnahmeelemente mit je einem Paar an Vertiefungen 2 vorgesehen. Jedes Aufnahmeelement weist dann zwei Nuten 21 auf, die seitlich in der Mantelfläche 20 angeordnet sind, wobei jede Nut 21 von der Grundfläche 8 in Richtung Deckfläche 7 verläuft, und eine bestimmte Länge aufweist, welche geringer als die Höhe h des Grundkörpers 5 ist. Die Nut endet an der Höhe-Auflagefläche h3 von der Grundkörper-Mitte h/2 aus gemessen. Jede Nut 21 weist eine Auflagefläche 3 am oberen Ende der Höhe-Auflagefläche h3 auf, wobei in jeder Auflagefläche 3 eine Vertiefung 2 vorgesehen ist, welche Richtung Deckfläche 7 verläuft.

Die Nut 21 erstreckt sich seitlich an der Mantelfläche 20 bis zur Durchgangsöffnung 2. Damit öffnet die Nut 21 die Durchgangsöffnung über die Höhe-Auflagefläche h3 von Grundkörper-Mitte h/2 aus der Nut 21. Die Nut 21 ist etwa halbkreisförmig, wobei sie im Bereich der Durchgangsöffnung 2 einen Krümmungsradius aufweist, welcher dem Radius r der Bohrung (Durchgangsöffnung 2) entspricht. Dadurch ist ein seitliches Einführen des Transportsystems möglich und die Nut ist gleichzeitig ein Leitsystem für die Transportsystem-Vorsprünge 10 (siehe auch Fig. 3a, 3b, 6a, 6b) und die Lagersystem-Vorsprünge 13 (siehe auch Fig. 6a, 6b).

Das Transportsystem T (Fig. 2) weist eine Positionierhilfe auf, die eine zur Mantelfläche passgleiche Transportsystem-Teilform 9, eine zur Auflagefläche passgleiche Transportsystem-Auflagefläche 11 und einen zur Vertiefung passgleichen Transportsystem-Vorsprung 10 aufweist. Der eingesetzte Rohling 1 in das Transportsystem T ist in Fig. 3a und 3b dargestellt und man erkennt die passgleichen Abschnitte zur formschlüssigen Aufnahme des Rohlings 1 in der Positionierhilfe für ein Transporsystem.

Das zweite Aufnahmeelement ermöglicht die Aufnahme des Rohlings 1 in einem Lagersystem L mit entsprechender Positionierhilfe (siehe Fig. 6a, 6b). Die Positionierhilfe für das Lagersystem umfasst:
- eine zur Mantelfläche 20 passgleiche Lagersystem-Teilform 16,
- eine zur Auflagefläche 3 passgleiche Lagersystem-Auflagefläche 12 und
- einen zur Vertiefung passgleichen Lagersystem-Vorsprung 13.

Die Lagersystem-Teilform 16 ist passend zu einem Abschnitt der zylinderförmigen Mantelfläche 20 des Grundkörpers 5.

Die Nut 21 wird am oberen Ende der Höhe-Auflagefläche (h3) von Grundkörper-Mitte (h/2) aus von der Auflagefläche 3 begrenzt. Diese Auflagefläche 3 ist parallel zur Deckfläche 7 ausgebildet. Pro Aufnahmeelement sind zwei Auflageflächen 3 vorgesehen, die parallel sind und eine definierte Höhe-Auflagefläche h3 von der Grundkörper-Mitte h/2 aus zur Grundfläche 8 aufweisen.

Von der Deckfläche 7 aus sind seitliche Halteflächen 22 vorgesehen, welche als Einbuchtungen ausgebildet sind und sich von der Deckfläche 7 Richtung Grundfläche 8 mit einer klar definierten Höhe - seitliche Haltefläche h1 - von Grundkörper-Mitte h/2 aus erstrecken.

Weiters sind Halteflächen 6 vorgesehen, welche zwischen Deckfläche 7 und Grundfläche 8 mit einer klar definierten Höhe-Haltefläche h2 von der Grundkörper-Mitte h/2 aus angeordnet sind, wobei zwischen der Haltefläche 6 und der Grundfläche 8 eine Einbuchtung 23 in der Mantelfläche 20 vorgesehen ist. Bevorzugt sind mehrere Haupthalteflächen 6 (hier drei) vorgesehen.

Der Grundkörper 5 besteht aus einem fräsbaren Rohmaterial, im Fall eines Dentalelements für den Zahnersatz umfasst es z.B. Kunststoff.

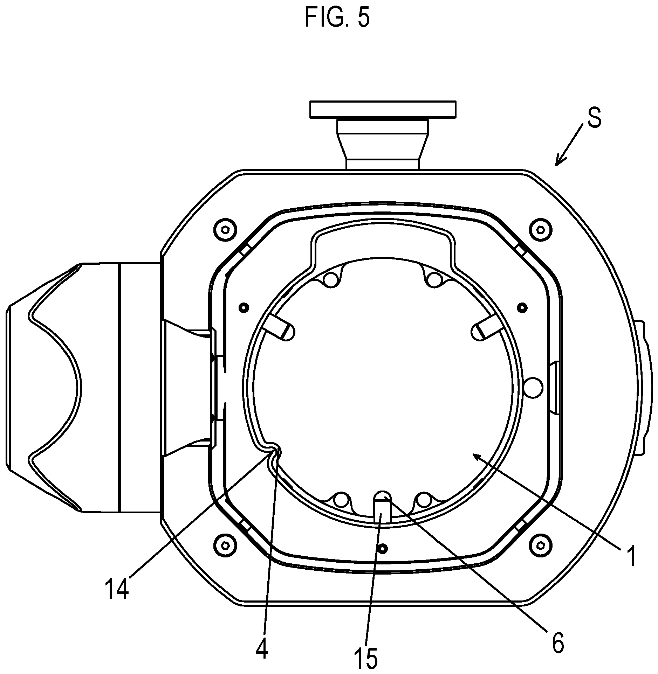

Die zwei Durchgangsöffnungen 2 des ersten Aufnahmeelements weisen einen ersten Abstand L1 auf, die zwei Durchgangsöffnungen 2 des zweiten Aufnahmeelements weisen einen zweiten Abstand L2 auf, der kleiner als der ersten Abstand L1 ist. Abstände L1, L2 zwischen 20 mm und 100 mm bevorzugt werden. Die Abstände L3, L4 der Durchgangsbohrungen 2 jedes Aufnahmeelementes vom Umfang können identisch oder unterschiedlich sein. Ein oder mehrere Positioniernuten 4 können in beliebiger Form als Nut, Einbuchtung, Schlitz, Kerbe oder andersartig dargestellt werden. Die Positioniernut 4 kann durch die gesamte Höhe h des Rohlings gehen oder einen vordefinierten Abstand zur Grundfläche 8 und/oder Deckfläche 7 besitzen. Bevorzugt ist die Positioniernut 4 singulär als durchgehende Nut dargestellt. In die Nut 4 greift die Gegenpositioniernut 14 der Spannvorrichtung S ein (Fig. 5) und positioniert so den Rohling 1. Die Spannvorrichtung-Auflagepunkte 15 greifen in die Haltefläche 6 ein. Gemeinsam mit den seitlichen Halteflächen 22 und entsprechenden Vorsprüngen in der Spannvorrichtung S wird der Rohling in der Spannvorrichtung S exakt gehalten.

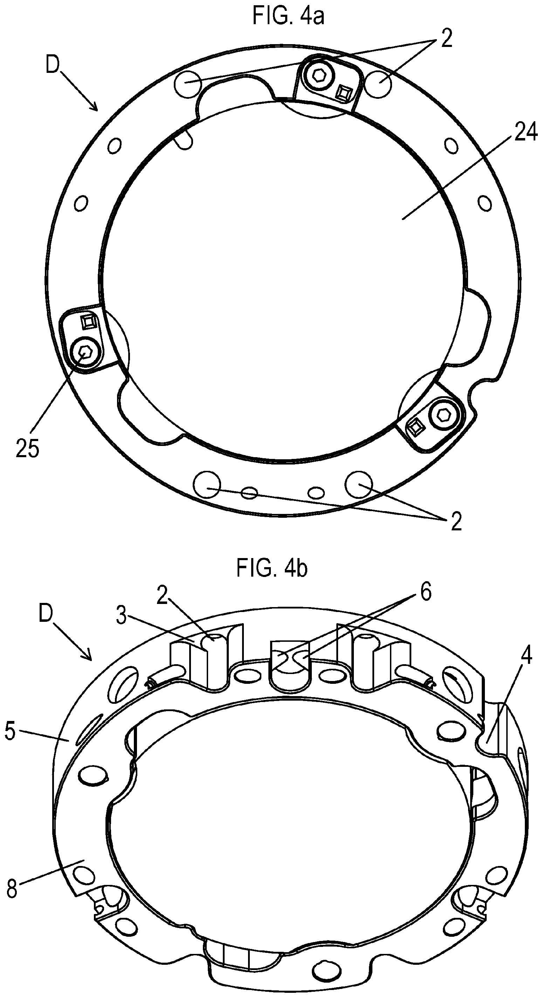

Das Ausführungsbeispiel der Fig. 4a und 4b zeigt einen erfindungsgemäßen Rohling 1 für ein Dentalelement analog zum Beispiel der Fig. 1a bis 1c mit dem Unterschied, dass der Grundkörper 5 (anders als in Fig. 1a bis 1c) nicht einteilig ausgebildet ist, sondern dass der Grundkörper 5 eine Halterung D und einen fräsbaren Rohmaterialköper 24 umfasst. Der Rohling 1 weist Parallelen zu den Beispielen der Fig. 1a bis 1c auf, allerdings sind einzelne Bauteile nicht unmittelbar in den einteiligen Grundkörper 5 eingebracht, sondern in die Halterung D. Es darf auf die Figurenbeschreibung von Fig. 1a bis 1c verwiesen werde. Eine Halterung D ermöglicht, dass ein nahezu beliebiger Rohmaterialkörper 24 in die Halterung D eingesetzt werden kann. Insbesondere kann die Grundform des Rohmaterialkörpers 24 beliebig sein, sodass der Rohmaterialkörper 24 eine andere Form aufweisen kann. Auch allfällige kleine geometrische Unterschiede aufgrund des verwendeten Materials oder der Fertigung wirken sich nicht auf die Geometrie des Grundkörpers 5 selbst aus. Der Rohmaterialkörper 24 ist im gezeigten Beispiel mittel Verbindungsmitteln in Form von Klemmpratzen 25 lösbar an der Halterung D befestigt. Der Rohmaterialkörper 24 kann Zirkon(IV)-oxid oder andere Materialien wie z.B. Kunststoff umfassen. Die Haltefläche 6 ist in diesem Ausführungsbeispiel so gestaltet, dass eine exakte Repositionierung möglich ist.

Die Halterung D übernimmt ident die gleichen Funktionen wie der in Fig. 1a bis 1c beschriebene einstückige Grundkörper und hat den Zweck, verschiedene Rohmaterialkörper 24 mit verschiedenen Formen, Größen und Höhen einzuspannen, somit kann das Komplettsystem universaler gemacht werden.

Weiters kann ein Etikett vorgesehen sein. Z.B. kann ein QR-Code als Etikett vorgesehen sein, welcher die Information über den Rohling 1 enthält.

Die vorliegende Erfindung ermöglicht ein automatisches, mechanisches Transportieren, Positionieren/Spannen und Lagern des Rohlings 1. Dazu sind neben dem oben beschriebenen Rohling 1 auch verschiedenen Systeme/Vorrichtungen L, T, S vorgesehen, in denen der Rohling 1 gelagert, transportiert und gespannt wird. Diese Systeme/Vorrichtungen L, T, S sind kompatibel zum Rohling 1.

So weist das in Fig. 2 und 3a bis 3c gezeigte Transportsystem T eine zu einem Abschnitt der Mantelfläche 20 des Rohlings 1 kompatible Transportsystem-Teilform 9 auf, sowie eine zur Durchgangsöffnung 2 samt Nut 21 und Auflagefläche 3 kongruente Transportsystem-Positionierhilfe mit Transportsystem-Vorsprung 10 und Transportsystem-Auflagefläche 11 auf.

Die zueinander kompatiblen Bereiche an beiden Positionierhilfen und Rohling 1 haben die Aufgabe, den Rohling 1 im Transportsystem T sowie auch im Lagersystem L (siehe Fig. 6a, 6b) zu zentrieren/positionieren.

Auch weist das Transportsystem T und das Lagersystem L eine Transportsystem-Auflagefläche 11 bzw. Lagersystem-Auflagefläche 12 auf, die parallel zur Auflagefläche 3 sind und beim Lagern/Transportieren in den jeweiligen Systemen L, T, S aufliegen. Ein oder mehrere Halteflächen 6 und Einbuchtungen und/oder ein oder mehrere Positioniernuten 4 werden in der Spannvorrichtung S benötigt. Die Spannvorrichtung S besitzt dazu eine oder mehrere entsprechende Gegenpositioniervorsprünge 14 und Gegenauflageflächen/punkte 15, die kompatibel zu den Positionierungsnuten 4 und Auflageflächen 6 sind und somit den Rohling 1 in der Spannvorrichtung S ausrichten.

Die Spannvorrichtung S besitzt zudem ein oder mehrere Spannvorrichtungs-Auflageflächen 15, die an der Anzahl und Position kompatibel zu den Auflageflächen 6 des Rohlings 1 sind, die den Rohling in der Vorrichtung S halten und auch ausrichten können. Auf die seitliche Haltefläche 22 drücken von außen Spannelemente, welche den Rohling 1 fest einspannen.

In der Anwendung sieht es wie folgt aus: Das Transportsystem T bewegt sich seitlich unter den Rohling 1, der sich in einer festen (unbeweglichen), definierten Position im Lagesystem L befindet. Durch die gegenseitigen Positionierungshilfen/Aufnahmeelemente kann der Rohling 1 im Transportsystem T zentriert werden und beim Heben des Transportsystems T treffen die Auflagefläche 3 und die Transportsystem-Auflagefläche 11 aufeinander und wirken als Hebefläche. So auch kollidieren der Grundkörper 5/Mantelfläche 20 und die Transportsystem-Teilform 9 beim Anheben des Dentalrohlings 1 im Transportsystem T. Damit kann die Position des Rohlings 1 klar definiert werden, wodurch ein genaues Transportieren und Positionieren ermöglicht werden.

Das Lagersystem L (Fig. 6a, 6b) weist ein Magazin für eine beliebige Anzahl an Rohlingen 1 (im gezeigten Ausführungsbeispiel sind es drei Rohlinge) auf. Die Rohlinge 1 sind übereinander mit einem solchen Abstand gelagert, dass das Transportsystem T mit der Transportsystem-Positionierhilfe einen Rohling 1 von unten aufnehmen kann. Umgekehrt kann das Transportsystem T einen Rohling 1 in das Magazin einführen und an der Lagersystem-Positionierhilfe abgeben.

Der sich jetzt im Transportsystem T befindende Rohling 1 wird zu der Spannvorrichtung S bewegt, die sich in einer klar definierten Position befindet. Sobald das Transportsystem T diese Position erreicht hat, bewegt es sich nach unten bis sich die gegenseitigen Halteflächen 6 und Spannvorrichtung-Auflagefläche/punkte 15 berühren. Hierbei kann der Rohling 1 auch in der Spannvorrichtung S und / oder auch durch die gegenseitigen Positioniernuten 4, 14 ungefähr ausgerichtet werden. Somit kann jetzt manuell wie auch automatisch der Rohling 1 gespannt und bearbeitet werden.

Der Rücktransport eines bearbeiteten Rohlings 1 erfolgt gleich wie der Hintransport, wobei das Transportsystem T sich unter dem in der Spannvorrichtung S befindenden Rohling 1 mithilfe der Positionierungshilfen/Aufnahmeelemente bewegt. Mit Transportsystem-Teilform 9 und Mantelfläche 20 sowie Auflagefläche 3, 11 kann der Rohling 1 positioniert und im Transportsystem T gehalten und zurück ins Lagesystem L transportiert werden.

Um eine einfache automatisierte Erkennung der Rohlinge 1 in den verschiedenen Systemen/Vorrichtungen L, T, S zu ermöglichen, kann ein QR-Code am Rohling 1 z.B. gedruckt, aufgeklebt, gelasert oder ähnlich angebracht werden. Mithilfe eines in der Maschine eingebauten QR-Lesegerätes können verschiedene Eckdaten des Rohlings 1 ausgelesen werden.

### Verwendete Bezugszeichen:

| | | | |
|---|---|---|---|
| L | Lagersystem | 15 | Spannvorrichtung - Auflagefläche/punkt(e) |
| T | Transportsystem | 16 | Lagersystem-Teilform |
| S | Spannvorrichtung | 20 | Mantelfläche |
| D | Dentalrohling-Halterung | 21 | Nut |
| 1 | Rohling | 22 | Seitliche Haltefläche |
| 2 | Vertiefung | 23 | Einbuchtung (en) |
| 3 | Auflagefläche | 24 | Rohmaterialkörper |
| 4 | Positionierungsnut | 25 | Klemmpratze |
| 5 | Grundkörper | r | Radius der Vertiefung |
| 6 | Haltefläche | h | Höhe des Grundkörpers |
| 7 | Deckfläche | h/2 | Grundkörper-Mitte |
| 8 | Grundfläche | h1 | Höhe-seitliche Haltefläche |
| 9 | Transportsystem-Teilform | h2 | Höhe-Haltefläche |
| 10 | Transportsystem-Vorsprung | h3 | Höhe-Auflagefläche |
| 11 | Transportsystem-Auflagefläche | L1 | Abstand Vertiefung zueinander |
| 12 | Lagersystem-Auflagefläche | L2 | Abstand Vertiefung zueinander |
| 13 | Lagersystem-Vorsprung | L3 | Abstand Vertiefung zur Mantelfläche |
| 14 | Gegen-Positioniernut | L3 | Abstand Vertiefung zur Mantelfläche |

## Patentansprüche

1. Rohling (1) zur Herstellung eines Dentalelements, wobei der Rohling (1) einen zylindrischen Grundkörper (5) mit einer Deckfläche (7), einer Grundfläche (8) und einer Mantelfläche (20) aufweist, wobei in der Mantelfläche (20) zumindest eine Positionierungsnut (4) eingebracht ist, wobei der Rohling (1) ein erstes Aufnahmeelement und ein beabstandetes zweites Aufnahmeelement aufweist, wobei jedes Aufnahmeelement zumindest eine Nut (21) aufweist, die seitlich in der Mantelfläche (20) angeordnet ist, wobei die Nut (21) von der Grundfläche (8) in Richtung Deckfläche (7) verläuft, wobei die Nut (21) eine Auflagefläche (3) am oberen Ende aufweist und wobei die Nut (21) eine Länge aufweist, welche der Summe aus der Hälfte der Höhe (h) des Grundkörpers (5) plus einer Höhe-Auflagefläche (h3) entspricht, wobei die Höhe-Auflagefläche der Abstand zwischen der Mitte des Grundkörpers (5) zur Auflagefläche ist, wobei die Länge der Nut (21) geringer als die Höhe (h) des Grundkörpers (5) ist, **dadurch gekennzeichnet, dass** in der Auflagefläche (3) eine Vertiefung (2) vorgesehen ist, welche Richtung Deckfläche (7) verläuft.

2. Rohling nach Anspruch 1, **dadurch gekennzeichnet, dass** die Vertiefung (2) eine Bohrung mit Radius (r) ist.

3. Rohling nach Anspruch 1 oder Anspruch 2, **dadurch gekennzeichnet, dass** die Vertiefung (2) eine Durchgangsöffnung (2) ist.

4. Rohling nach Anspruch 3, **dadurch gekennzeichnet, dass** die Nut (21) im Bereich der Durchgangsöffnung (2) halbkreisförmig ist und einen Krümmungsradius aufweist, welcher dem Radius (r) der Bohrung entspricht.

5. Rohling nach einem der Ansprüche 1 bis 4, **dadurch gekennzeichnet, dass** die Auflagefläche (3) am oberen Ende der Höhe-Auflagefläche (h3) von Grundkörper-Mitte (h/2) aus parallel zur Deckfläche (7) ist.

6. Rohling nach einem der Ansprüche 1 bis 5, **dadurch gekennzeichnet, dass** jedes Aufnahmeelement zumindest zwei Nuten (21) aufweist.

7. Rohling nach einem der Ansprüche 1 bis 6, **dadurch gekennzeichnet, dass** die Höhe-Auflagefläche (h3) von der Grundkörper-Mitte (h/2) beabstandet ist.

8. Rohling nach einem der Ansprüche 1 bis 7, **dadurch gekennzeichnet, dass** zumindest eine seitliche Haltefläche (22) vorgesehen ist, welche als Einbuchtung ausgebildet ist und von der Deckfläche (7) Richtung Grundfläche (8) über eine Höhe-seitliche Haltefläche (h1) von der Grundkörper-Mitte (h/2) beanstandet ist.

9. Rohling nach Anspruch 8, **gekennzeichnet durch** zumindest zwei, vorzugsweise zumindest drei seitliche Halteflächen (22).

10. Rohling nach einem der Ansprüche 1 bis 9, **dadurch gekennzeichnet, dass** zumindest eine Haltefläche (6) auf einer Höhe-Haltefläche (h2) vorgesehen ist, welche von der Grundkörper-Mitte (h/2) beabstandet ist, wobei die Haltefläche (6) zwischen Deckfläche (7) und Grundfläche (8) angeordnet ist und vorzugsweise parallel zur Deckfläche (7) ausgebildet ist, wobei zwischen der Haltefläche (6) und der Grundfläche (8) eine Einbuchtung (23) in der Mantelfläche (20) vorgesehen ist.

11. Rohling nach einem der Ansprüche 1 bis 10, **dadurch gekennzeichnet, dass** der Grundkörper (5) eine im Wesentlichen gerade Kreiszylinderform aufweist.

12. Rohling nach einem der Ansprüche 1 bis 11, **dadurch gekennzeichnet, dass** der Grundkörper (5) eine Halterung (D) und einen fräsbaren Rohmaterialköper (24) umfasst, wobei die Halterung (D) vorzugweise lösbar mit dem Rohmaterialkörper (24) verbunden ist.

13. Rohling (1) nach einem der Ansprüche 1 bis 12, **dadurch gekennzeichnet, dass** ein Etikett, vorzugsweise umfassend einen QR-Code, am Grundkörper (5) vorgesehen ist.

14. Transportsystem (T) für einen Rohling (1) nach einem der Ansprüche 1 bis 13, mit einer Transportsystem-Positionierhilfe, wobei die Transportsystem-Positionierhilfe
• eine zur Mantelfläche (20) passgleiche Transportsystem-Teilform (9),
• zwei zur Auflagefläche (3) passgleiche Transportsystem-Auflageflächen (11) und
• zwei zu den Vertiefungen (2) passgleiche Transportsystem-Vorsprünge (10) aufweist.

15. Lagersystem (L) oder Spannvorrichtung (S) für einen Rohling (1) nach einem der Ansprüche 1 bis 13, mit einer Lagersystem-Positionierhilfe,
• eine zur Mantelfläche (20) passgleiche Lagersystem-Teilform (16),
• zwei zur Auflagefläche (3) passgleiche Lagersystem-Auflageflächen (12) und
• zwei zu den Vertiefungen (2) passgleichen Lagersystem-Vorsprünge (13) aufweist.

## Claims

1. Blank (1) for producing a dental element, the blank (1) having a cylindrical base body (5) with a top surface (7), a base surface (8) and a lateral surface (20), wherein a positioning groove (4) is provided in the lateral surface (20), wherein the blank (1) has a first receiving element and a spaced-apart second receiving element, wherein each receiving element has at least one groove (21) which is arranged laterally in the lateral surface (20), wherein the groove (21) extends from the base surface (8) in the direction of the top surface (7), wherein the groove (21) has a support surface (3) at the upper end and wherein the groove (21) has a length, which corresponds to the sum of half of the height (h) of the base body (5) plus a height bearing surface (h3), wherein the height bearing surface (h3) is the distance between the center of the base body (5) and the support surface (3), wherein the length of the groove (21) is less than the height (h) of the base body (5), **characterized in that** a recess (2) is provided in the support surface (3), which recess extends in the direction of the top surface (7).

2. Blank according to claim 1, **characterized in that** the recess (2) is a bore with radius (r).

3. Blank according to claim 1 or claim 2, **characterized in that** the recess (2) is a through-opening (2).

4. Blank according to claim 3, **characterized in that** the groove (21) is semicircular in the region of the through opening (2) and has a radius of curvature which corresponds to the radius (r) of the bore.

5. Blank according to one of claims 1 to 4, **characterized in that** the support surface (3) at the upper end of the height bearing surface (h3) is parallel to the top surface (7) from the center (h/2) of the base body.

6. Blank according to one of claims 1 to 5, **characterized in that** each receiving element has at least two grooves (21).

7. Blank according to one of claims 1 to 6, **characterized in that** the height bearing surface (h3) is spaced from the center of the base body (h/2).

8. Blank according to one of claims 1 to 7, **characterized in that** at least one lateral retaining surface (22) is provided, which is designed as an indentation and is projected from the top surface (7) in the direction of the base surface (8) via a height-side retaining surface (h1) from the center (h/2) of the base body.

9. Blank according to claim 8, **characterized by** at least two, preferably at least three lateral retaining surfaces (22).

10. Blank according to one of claims 1 to 9, **characterized in that** at least one retaining surface (6) is provided on a height retaining surface (h2) which is spaced from the center (h/2) of the base body, the retaining surface (6) being arranged between the top surface (7) and the base surface (8) and preferably being formed parallel to the top surface (7), an indentation (23) being provided in the lateral surface (20) between the retaining surface (6) and the base surface (8).

11. Blank according to one of claims 1 to 10, **characterized in that** the base body (5) has a substantially straight circular cylindrical shape.

12. Blank according to one of claims 1 to 11, **characterized in that** the base body (5) comprises a holder (D) and a millable raw material body (24), wherein the holder (D) is preferably detachably connected to the raw material body (24).

13. Blank (1) according to one of claims 1 to 12, **characterized in that** a label, preferably comprising a QR code, is provided on the base body (5).

14. A transport system (T) for a blank (1) according to any one of claims 1 to 13, comprising a transport system positioning aid, wherein the transport system positioning aid comprises
• a transport system partial shape (9) that fits the lateral surface (20),
• two transport system support surfaces (11) matching the support surface (3) and
• two transport system protrusions (10) matching the recesses (2).

15. Storage system (L) or clamping device (S) for a blank (1) according to any one of claims 1 to 13, comprising a storage system positioning aid, has
• a bearing system part shape (16) that fits the lateral surface (20),
• two bearing system support surfaces (12) matching the support surface (3) and
• two bearing system protrusions (13) that match the recesses (2).

## Revendications

1. Ebauche (1) pour la fabrication d'un élément dentaire, laquelle ébauche (1) comporte un corps de base cylindrique (5) avec une surface de couverture (7), une surface de fond (8) et une surface latérale (20), au moins une rainure de positionnement (4) étant ménagée dans la surface latérale (20), laquelle ébauche (1) comporte un premier élément de réception et un deuxième élément de réception, chaque élément de réception comportant au moins une rainure (21) qui est disposée latéralement dans la surface latérale (20), cette rainure (21) courant à partir de la surface de fond (8) en direction de la surface de couverture (7), cette rainure (21) comportant une surface d'appui (3) à son extrémité supérieure et cette rainure (21) présentant une longueur qui correspond à la somme de la moitié de la hauteur (h) du corps de base (5) et de la hauteur de surface d'appui (h3), la hauteur de surface d'appui (h3) étant la distance entre le milieu du corps de base (5) et la surface d'appui, la longueur de la rainure (21) étant inférieure à la hauteur (h) du corps de base (5), **caractérisée en ce que**, dans la surface d'appui (3), il est prévu une cavité (2) qui court en direction de la surface de couverture (7).

2. Ebauche selon la revendication 1, **caractérisée en ce que** la cavité (2) est un trou de rayon (r).

3. Ebauche selon la revendication 1 ou 2, **caractérisée en ce que** la cavité (2) est un orifice traversant (2).

4. Ebauche selon la revendication 3, **caractérisée en ce que** la rainure (21) est semi-circulaire dans la région de l'orifice traversant (2) et présente un rayon de courbure qui correspond au rayon (r) du trou.

5. Ebauche selon une des revendications 1 à 4, **caractérisée en ce que** la surface d'appui (3) à l'extrémité supérieure de la hauteur de surface d'appui (h3) est parallèle à la surface de couverture (7) à partir du milieu de corps de base (h/2).

6. Ebauche selon une des revendications 1 à 5, **caractérisée en ce que** chaque élément de réception comporte au moins deux rainures (21).

7. Ebauche selon une des revendications 1 à 6, **caractérisée en ce que** la hauteur de surface d'appui (h3) est distante du milieu de corps de base (h/2).

8. Ebauche selon une des revendications 1 à 7, **caractérisée en ce qu'**il est prévu au moins une surface de retenue latérale (22) qui est configurée comme une échancrure et s'étend à partir de la surface de couverture (7) en direction de la surface de base (8) jusqu'à une hauteur de surface de retenue latérale (h1) par rapport au milieu de corps de base (h/2).

9. Ebauche selon la revendication 8, **caractérisée par** au moins deux, de préférence au moins trois surfaces de retenue latérales (22).

10. Ebauche selon une des revendications 1 à 9, **caractérisée en ce qu'**il est prévu au moins une surface de retenue (6) sur une hauteur de surface de retenue (h2) qui est distante du milieu de corps de base (h/2), laquelle surface de retenue (6) est agencée entre la surface de couverture (7) et la surface de base (8) et de préférence configurée parallèlement à la surface de couverture (7), une échancrure (23) étant prévue dans la surface latérale (20) entre la surface de retenue (6) et la surface de base (8).

11. Ebauche selon une des revendications 1 à 10, **caractérisée en ce que** le corps de base (5) présente une forme cylindrique sensiblement rectiligne.

12. Ebauche selon une des revendications 1 à 11, **caractérisée en ce que** le corps de base (5) comporte une fixation (D) et un corps de matière brute fraisable (24), la fixation (D) étant reliée de préférence de manière détachable avec le corps de matière brute (24).

13. Ebauche selon une des revendications 1 à 12, **caractérisée en ce qu'**il est prévu une étiquette, de préférence comportant un QR-code, sur le corps de base (5).

14. Système de transport (T) pour une ébauche (1) selon une des revendications 1 à 13, avec un dispositif d'aide de positionnement de système de transport, lequel dispositif d'aide de positionnement de système de transport présente une pièce moulée de système de transport (9) homologue à la surface latérale (20), deux surfaces d'appui de système de transport (11) homologues à la surface d'appui (3) et
deux saillies de système de transport (10) homologues aux cavités (2).

15. Système de stockage (L) ou dispositif de serrage (S) pour une ébauche (1) selon une des revendications 1 à 13, avec un dispositif d'aide de positionnement de système de stockage présente
une pièce moulée de système de stockage (16) homologue à la surface latérale (20),
deux surfaces d'appui de système de stockage (12) homologues à la surface d'appui (3) et
deux saillies de système de stockage (13) homologues aux cavités (2).
